# EUROPEAN PATENT APPLICATION

(11) **EP 4 641 569 A1**
(43) Date of publication of application: **29.10.2025**
(21) Application number: 25172527.1
(22) Date of filing: 25.04.2025
(51) Int. Cl.: G11B 27/031, G11B 27/34, G06F 3/04845, G06F 3/04847, G06T 11/60, G06T 13/80

(54) **METHOD, APPARATUS, DEVICE AND MEDIUM FOR EDITING VIDEO IN AN APPLICATION**

(30) Priority: 25.04.2024 CN 202410509898
(71) Applicant: Beijing Zitiao Network Technology Co., Ltd., Beijing 100190 (CN)
(72) Inventor: Peng, Haoxiang, Beijing, 100028 (CN); Gao, Guodong, Beijing, 100028 (CN); Li, Gang, Beijing, 100028 (CN); Ma, Zhongping, Beijing, 100028 (CN)
(74) Representative: Grünecker Patent- und Rechtsanwälte PartG mbB

(57) **Abstract**

A method, an apparatus, a device, and a medium for editing a video in an application are provided. In a method, in an application, a video and a visual element for editing the video are acquired; the video is presented with a first player in the application, and the visual element is presented with a second player in the application.

## Description

### FIELD

Example embodiments of the present disclosure generally relate to video editing, and more particularly, to a method, an apparatus, a device, and a computer-readable storage medium for editing a video in an application.

### BACKGROUND

With the rapid development of video technologies, video editing applications have provided a variety of editing functions. For example, a user may add a variety of visual elements such as sticker animations, text animations, etc. into the video. The user may adjust a position, a size, and an orientation of a visual element in a video editing process. These editing operations may cause problems such as video lag or jitter. In addition, in the editing process, the user may not independently control the video playback and animation playback of visual elements, resulting in low editing efficiency. At this time, how to edit the video in a more efficient manner to improve the efficiency of video editing has become a difficulty and hot topic in the field of video editing.

### SUMMARY

In a first aspect of the present disclosure, a method for editing a video in an application is provided. In the method, in an application, a video and a visual element for editing the video are acquired. The video is presented with a first player in the application, and the visual element is presented with a second player in the application.

In a second aspect of the present disclosure, an apparatus for editing a video in an application is provided. The apparatus includes an acquisition module, a first presenting module and a second presenting module. The acquisition module is configured to acquire, in an application, a video and a visual element for editing the video. The first presenting module is configured to present the video with the first player in the application. The second presenting module is configured to present the visual element with the second player in the application.

In a third aspect of the present disclosure, an electronic device is provided. The electronic device includes at least one processing unit, and at least one memory coupled to the at least one processing unit and storing instructions executable by the at least one processing unit. The instructions, when executed by the at least one processing unit, cause the electronic device to perform the method according to the first aspect of the present disclosure.

In a fourth aspect of the present disclosure, a computer-readable storage medium is provided. The computer-readable storage medium has a computer program stored thereon. The computer program, when executed by a processor, causes the processor to implement the method according to the first aspect of the present disclosure.

In a fifth aspect of the present disclosure, a computer program product including a computer program is provided. The computer program, when executed by a processor, implements the method according to the first aspect of the present disclosure.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The foregoing and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an application environment in which an embodiment of the present disclosure may be implemented;
FIG. 2 illustrates a schematic diagram of an example for editing a video in an application according to some embodiments of the present disclosure;
FIG. 3 illustrates a schematic diagram of an example for presenting a setting control according to some embodiments of the present disclosure;
FIG. 4 illustrates a schematic diagram of an example for posture adjustment according to some embodiments of the present disclosure;
FIG. 5 illustrates a schematic diagram of an example for attribute adjustment according to some embodiments of the present disclosure;
FIG. 6 illustrates a schematic diagram of an example for play mode adjustment according to some embodiments of the present disclosure;
FIG. 7A illustrates a schematic diagram of an example for switching a player to a paused state according to an example embodiment of the present disclosure;
FIG. 7B illustrates a schematic diagram of an example for switching a player to a play state according to an example embodiment of the present disclosure;
FIG. 8 illustrates a flow chart of a method for editing a video in an application according to some embodiments of the present disclosure;
FIG. 9 illustrates a block diagram an apparatus for editing a video in an application according to some embodiments of the present disclosure; and
FIG. 10 illustrates a block diagram of a device capable of implementing various embodiments of the present disclosure.

### DETAILED DESCRIPTION

Embodiments of the present disclosure will be described in more detail below with reference to the accompanying drawings. Although certain embodiments of the present disclosure are illustrated in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. As used herein, the term "model" may represent an association relationship between various data. For example, the association relationship may be obtained based on various technical solutions currently known and/or to be developed in the future.

It may be understood that the data involved in the technical solution (including but not limited to the data itself, the acquisition or use of the data) should follow the requirements of the corresponding laws and regulations and related regulations.

It can be understood that, before the technical solutions disclosed in the embodiments of the present disclosure are used, the types of personal information related to the present disclosure, the usage scope, the usage scenario and the like should be notified to the user in an appropriate manner according to the relevant laws and regulations, and the authorization of the user is obtained.

For example, in response to receiving an active request from a user, prompt information is sent to the user to explicitly prompt the user that the requested operation will need to acquire and use the personal information of the user. Therefore, the user can autonomously select whether to provide personal information to software or hardware executing the operation of the technical solution of the present disclosure according to the prompt information.

As an optional but non-limiting embodiment, in response to receiving an unsolicited request from the relevant user, for example, the prompt information may be sent to the relevant user by a pop-up window, and the prompt information may be presented in the form of text in the pop-up window. In addition, the popup window may also carry a selection control for the user to select "agree" or "don't agree" to provide information to the electronic device.

It may be understood that the foregoing notification and obtaining user authorization processes are merely illustrative, and do not constitute a limitation on the embodiments of the present disclosure, and other manners of meeting related laws and regulations may also be applied to the embodiments of the present disclosure.

The term "responsive to" as used herein means a state in which a respective event occurs or condition is satisfied. It will be appreciated that the timing of execution of a subsequent action performed in response to the event or condition is not necessarily strongly correlated with the time at which the event occurs or the condition holds. For example, in some cases, subsequent actions may be performed immediately when an event occurs or a condition holds; while in other cases, subsequent actions may be performed after a period of time elapses after an event occurs or a condition holds.

### Example Environment

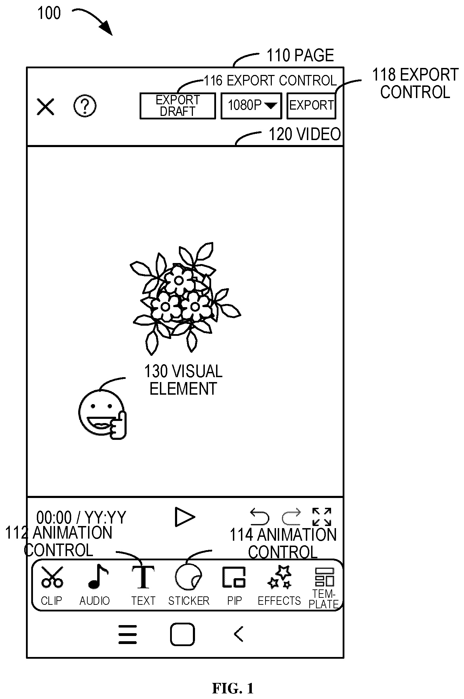

Video editing applications have provided various editing functions, and an overview of the application environment provided in the present disclosure is illustrated in FIG. 1. FIG. 1 illustrates a schematic diagram 100 of an application environment in which example embodiments of the present disclosure may be implemented. As illustrated in FIG. 1, an application may provide a page 110 to edit a video. The user may load the video 120 to be edited and the visual element 130 for editing the video in the page 110. The page 110 may include an animation control 112 and an animation control 114. The animation control 112 may add a text type animation to the video 120, and the animation control 114 may add a sticker type animation to the video 120. The page 110 may also include other editing controls, such as a clip control, an audio control, an effect control, etc., and the page 110 may also include an export control 116 for exporting the edit draft and an export control 118 for exporting the video.

The user may add a visual element 130 to the video 120 and may adjust the position, the size, and the orientation of the visual element 130. Generally, the frequency of the video 120 depends on the frequency set during production, such as about 30 frames per second (or other values). However, the refresh frequency of the visual element 130 may reach the refresh frequency of the client device (e.g., 120 frames per second or other values). In this case, in the process of the user moving the visual element 130, the refresh frequency of the video 120 in an underlying layer is much lower than the refresh frequency of the visual element 130 in an upper layer, which may lead to problems such as video lag and/or jitter. In this case, how to edit the video in a more efficient manner to improve the efficiency of video editing has become a difficulty and hot topic in the field of video editing.

### Overview of Video Editing

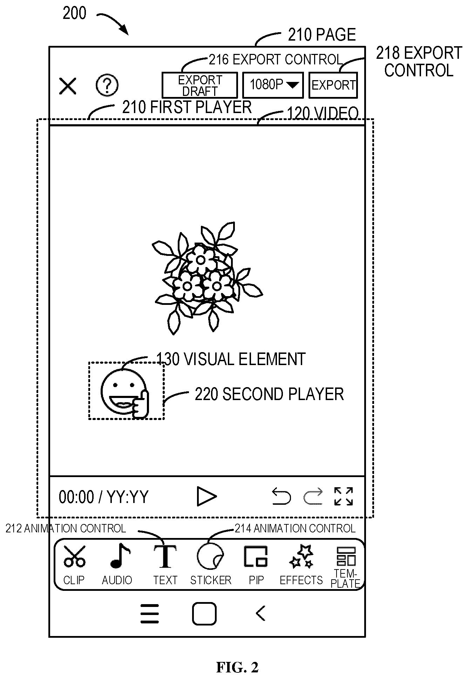

In order to at least partially solve the deficiencies in the related art, according to example embodiments of the present disclosure, a method for editing a video in an application is provided. In summary, during editing of the video, two separate players may be used to play the video 120 and the visual element 130, respectively. An overview of some embodiments of the present disclosure is illustrated in FIG. 2. FIG. 2 illustrates a schematic diagram of an example of a dual player according to an example embodiment of the present disclosure. As illustrated in FIG. 2, the application may provide a page 210. The video 120 and the visual element 130 for editing the video 120 may be acquired. Furthermore, the video 120 may be presented with the first player 210 in the application and the visual element 130 may be presented with the second player 220 in the application.

With example embodiments of the present disclosure, the two players may play respectively according to respective frequencies of the video 120 and the visual element 130 without interfering with each other during video editing. In this way, the video lag and/or jitter during the video editing process may be reduced, thereby improving the visual effect in the video editing process and improving the video editing efficiency.

### Detailed Process of Video Editing

Having described the overview according to some example embodiments of the present disclosure, more details regarding video editing will be described below. In some embodiments, the visual element may include a sticker animation element and a text animation element. The visual element may be acquired through various methods. For example, the visual element 130 may be determined based on an adding request to add a visual element into the video 120. As a further example, the visual element 130 may be determined from a draft of the video 120.

As an example, the user may create a new video draft in the application, and import the video 120 to the video draft. Furthermore, the user may send an adding request to add the visual element to the video via the animation control 212 or the animation control 214. In this case, the text animation and/or the sticker animation specified by the adding request may be determined as the visual element 130. Alternatively, and/or additionally, the user may open a video draft previously stored in the application, and the video draft may include one or more existing visual elements. At this point, the existing visual element may be clicked to determine the visual element 130 to be used. Alternatively, and/or additionally, one or more visual elements may be further added.

With example embodiments of the present disclosure, the video may be processed in a variety of ways during different stages of video editing, to handle a plurality of visual elements in a more efficient manner. Alternatively, and/or additionally, after the editing process, the user may export the current video draft via the export control 216. The user may reopen the exported video draft and add the visual element to the video draft, delete the visual element from the video draft, and/or adjust the visual element in the video draft.

In some embodiments, after editing the video, an export operation may be performed to generate an exported video. The exported video includes the edited video and the edited visual element. Specifically, the user may export the processed video via the export control 218. In this case, a single exported video may be generated, and the exported video includes the video 120 and the visual element 130.

In some embodiments, in the process of presenting the visual element with the second player, the position of the visual element in the video may be acquired, and then the visual element may be presented at the position with the second player. With the example embodiments of the present disclosure, the refresh frequency (e.g., 120 frames/second) of the second player 220 may not interfere with the refresh frequency (e.g., 30 frames/second) of the first player 210, thus the problems such as lag may be avoided. The editing of the visual element 130 may be performed independently through the corresponding second player, such that the visual element may be edited more efficiently and conveniently. Furthermore, the second player is superimposed on the first player, such that a rich visual effect where the visual element 130 partially blocks the video 120 in the underlying layer may be presented.

It will be appreciated that the frame of the second player is in a hidden state, thereby allowing the edge of the visual element 130 to seamlessly blend with the video 120 in the underlying layer. Furthermore, compared with the first player that presents the full video, the second player may be implemented based on a lightweight player. In this way, the second player will not incur excessive resource consumption, thereby making it more suitable for the user to adjust the posture of the visual element during the editing process.

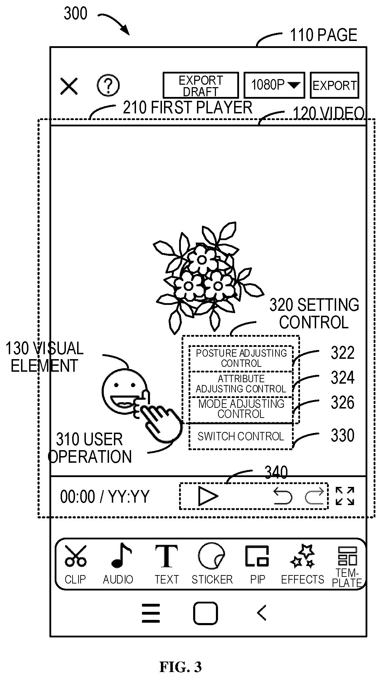

In some embodiments, the user may interact with the visual element to perform the editing process. More details are described in FIG. 3. FIG. 3 illustrates a schematic diagram 300 of an example of presenting a setting control according to an example embodiment of the present disclosure. As illustrated in FIG. 3, in response to receiving a user operation 310 (e.g., also referred to as a first user operation) for the visual element 130, a settings control 320 for setting the visual element may be presented based on the first user operation. The user may further interact with the settings control 320, in this case, in response to receiving the second user operation for the settings control, a visual element may be set based on the second user operation.

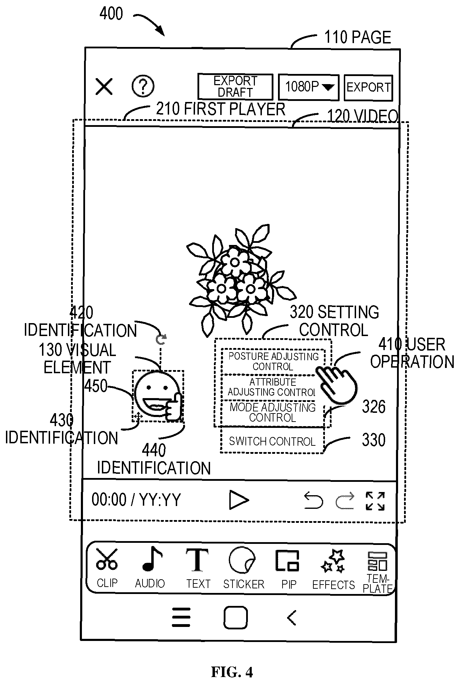

As illustrated in FIG. 3, in response to receiving the user operation 310, the setting control 320 for setting the visual element 130 may be presented. The setting control 320 may perform various adjustment operations. For example, the setting control 320 may include a posture adjusting control 322, an attribute adjusting control 324, and a mode adjusting control 326. Specifically, the posture adjusting control 322 may be configured to adjust a posture of the visual element 130 in the video 120, the attribute adjusting control 324 may be configured to adjust an attribute of the visual element 130, and the mode adjusting control 326 may be configured to adjust a play mode of the visual element 130. More details about using the posture adjusting control 322, the attribute adjusting control 324, and the mode adjusting control 326 will be described below with reference to FIGS. 4-6, respectively.

In some embodiments, to set the visual element, the posture of the visual element in the video may be adjusted based on the second user operation. The posture includes at least any of: a position, a size, or an orientation. Here, presenting the visual element with the second player includes adjusting the posture of the second player based on the adjusted posture of the visual element. In response to receiving the user operation for starting the first player, the position of the second player is updated based on the position of the visual element in the video. With example embodiments of the present disclosure, the user may adjust the posture of the visual element, and the adjusted visual element may be accurately presented with the second player.

More details of attitude adjustment are described with reference to FIG. 4. FIG. 4 illustrates a schematic diagram 400 of an example of attitude adjustment according to an example embodiment of the present disclosure. As illustrated in FIG. 4, a user operation 410 for the posture adjusting control 322 may be received. For example, the user may press an arbitrary position of the posture adjusting control 322 to call the posture adjusting control 322. Alternatively, and/or additionally, the user may long-press the visual element 130 to call the posture adjusting control.

Furthermore, in response to receiving the user operation 410, a plurality of identifications as illustrated in FIG. 4 may be presented, including at least any of an identification 420, an identification 430, an identification 440, or a dashed box 450. The dashed box 450 may be presented around the visual element 130, the identification 420, the identification 430, and the identification 440 may be presented at the position near the dashed box. The identification 420 may be configured to adjust the orientation of the visual element 130 in the video 120, the identification 430 may be configured to adjust the position of the visual element 130 in the video 120, and the identification 440 may be configured to adjust the size of the visual element 130 in the video 120.

The user may adjust the position, the size, and the orientation of the visual element 130 via the identifications described above. Furthermore, the position, the size and the orientation of the second player may be updated synchronously with the position, the size and the orientation of the visual element 130. With the example embodiment of the present disclosure, the visual element 130 presented by the second player does not have visual problems such as flickering, jitter, or lag, such that the user may set the posture of the visual element more accurately.

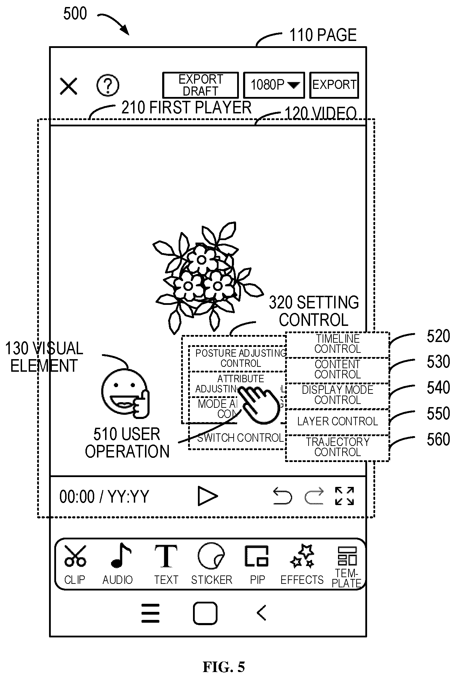

Referring to FIG. 5, more details of attribute adjustment are described. FIG. 5 illustrates a schematic diagram 500 of an example of attribute adjustment according to an example embodiment of the present disclosure. As illustrated in FIG. 5, the user may press an arbitrary position of the attribute adjusting control to call the posture adjusting control. The attribute of the visual element may be adjusted based on the second user operation. The attribute may include at least any of: a timeline, content, a display mode, a layer, and a trajectory.

As illustrated in FIG. 5, in response to receiving a user operation 510 for the attribute adjusting control, a timeline control 520, a content control 530, a display mode control 540, a layer control 550, and a trajectory control 560 may be presented. Specifically, the timeline control 520 may be configured to adjust the animation timeline of the visual element 130. Alternatively, and/or additionally, the timeline control 520 may adjust a mapping relationship between the animation timeline of the visual element 130 and a video timeline of the video 120. In this way, richer visual effects may be presented.

The content control 530 may be configured to adjust the content of the visual element 130. For the visual element in the text format, for example, the text content, the text size, the text font, the icon color, and the like may be adjusted. The display mode control 540 may be configured to adjust the mode of the visual element 130, such as an underline mode, a highlight mode, a flashing mode, a semi-transparent mode, or the like. The layer control 550 may be configured to set the layer of the visual element, particularly a layer relationship of a plurality of visual elements, such that the plurality of visual elements form an occlusion relationship, and the like. The trajectory control 560 may be configured to set a motion trajectory of the visual element. For example, the trajectory of the visual element may be set with a straight line, a curve, and/or a polyline, such that the visual element may float above the video and move along the set trajectory as the video plays. With the example embodiments of the present disclosure, various visual effects may be presented by adjusting the attribute of the visual element 130.

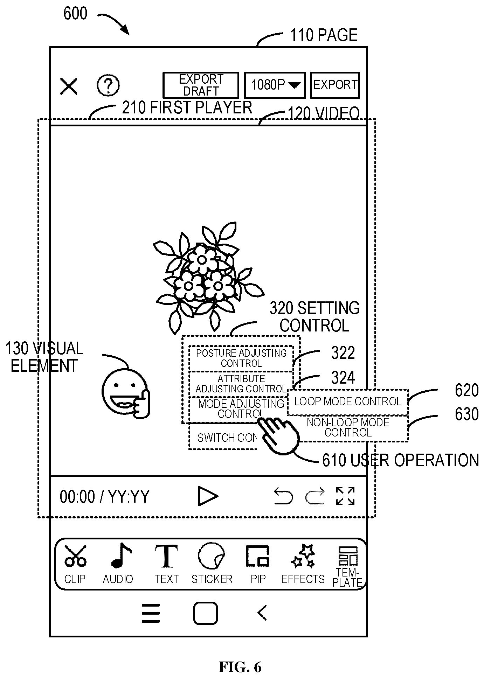

Referring to FIG. 6, more details of mode adjustment are described, and FIG. 6 illustrates a schematic diagram 600 of an example of a play mode adjustment according to an example embodiment of the present disclosure. The play mode of the visual element may be adjusted based on the second user operation. The play mode may include a loop mode and a non-loop mode. As illustrated in FIG. 6, the user may click an arbitrary position of the mode adjusting control 326. The play mode of the visual element 130 is adjusted in response to receiving the user operation 610. For example, after receiving the user operation 610, the loop mode control 620 and the non-loop mode control 630 as illustrated in FIG. 6 may be presented.

In some embodiments, if the loop mode control 620 is triggered, the visual element 130 may be played in a loop mode. If the non-looping mode control 630 is triggered, the visual element 130 may be played in a non-looping mode. By triggering different mode controls, the play mode of the visual element 130 may be switched, thereby presenting a richer visual effect.

In some embodiments, the loop mode or the non-loop mode may be preselected as a default mode of the visual element 130. The visual element 130 may be played in a default mode after being added to the video 120. When the mode needs to be switched, mode switching may be performed through different mode controls. With the example embodiment of the present disclosure, the play mode of the visual element 130 may be switched by different mode controls, and various visual effects may be presented.

In some embodiments, a switch control for switching the state of the second player may be presented based on the first user operation. The switch control may be used for starting the second player or pausing the second player. Returning to FIG. 3, in response to receiving the user operation 310, the switch control 330 may be further presented. The switch control 330 may be used to switch the state of the second player 220. For example, in response to receiving a user operation for the switch control 330, the start control or the pause control may be presented. With example embodiments of the present disclosure, the play state of the visual element 130 may be individually controlled with the switch control 330, regardless of the play state of the video 120 in the underlying layer. In this way, it may be convenient for the user to focus on adjusting various aspects of the visual element 130.

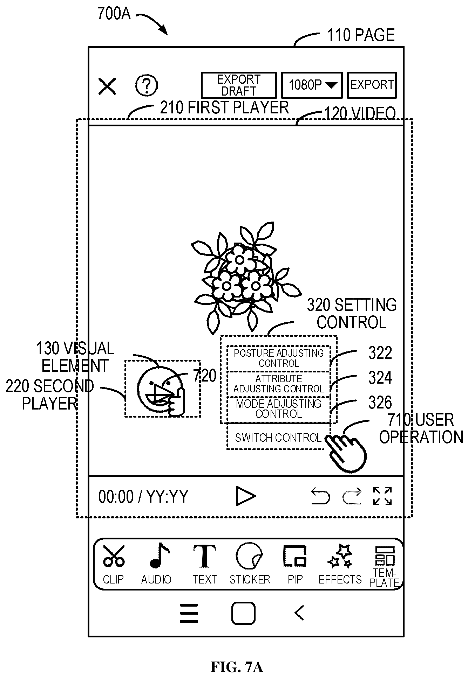

A switch control for switching the state of the second player may be presented based on the first user operation. The switch control may be used for starting the second player or pausing the second player. Furthermore, referring to FIG. 7A, more details are described. FIG. 7A illustrates a schematic diagram 700A of an example of switching to a paused state according to an example embodiment of the present disclosure. As illustrated in FIG. 7A, in response to receiving a user operation 710 for the switch control 330, the state of the second player 220 may be switched based on the user operation 710. For example, assuming that the animation of the visual element is currently playing, after receiving the user operation 710, an identification 720 illustrated in FIG. 7A may be presented.

In some embodiments, the identification 720 may indicate that the state of the second player 220 is the paused state, and the user may press the identification 720 to continue playing. Alternatively, and/or additionally, the user may switch the state of the second player 220 through the switch control 330.

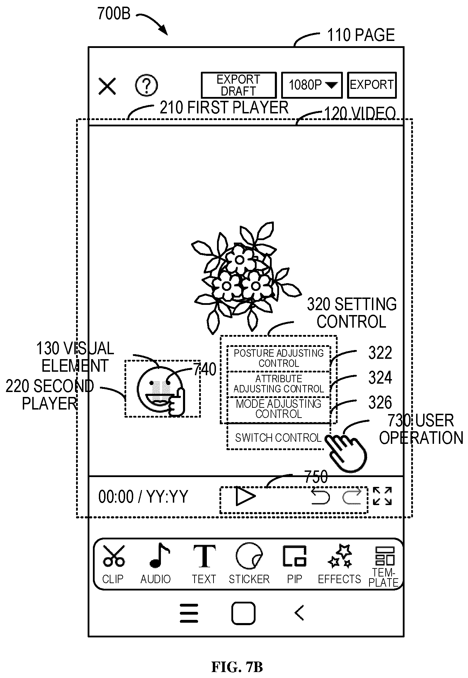

FIG. 7B illustrates a schematic diagram 700B of an example of switching to a play state according to an example embodiment of the present disclosure. As illustrated in FIG. 7B, in response to receiving the user operation 730 for the switch control, the state of the second player 220 may be switched based on the user operation 730. After receiving the user operation 730, an identification 740 as illustrated in FIG. 7B may be presented.

In some embodiments, a switch control for switching the state of the first player may be presented in the page 110 of the application. More details are described with reference to FIG. 7B, for example, a switch control 750 may be presented at the bottom of the first player as illustrated in FIG. 7B. By triggering the switch control, the state of the first player 210 may be switched. In this way, the play state of the video 120 maty be independently controlled with the switch control 750, regardless of the play state of the visual element 130 in the upper layer. In this way, it may be convenient for the user to focus on adjusting various aspects of the video 120.

With example embodiments of the present disclosure, the video 120 and the visual element 130 are respectively presented with the first player 210 and the second player 220. In this case, the edited video 120 is displayed in the lower layer, and the added visual element 130 is displayed in the upper layer. The refresh frequency of the second player 220 may be different from the refresh frequency of the first player 210, and the second player 220 and the first player 210 do not interfere with each other, thereby avoiding problems such as lag. Furthermore, the video 120 and the visual element 130 may be independently displayed (e.g., in different pause and/or play states), such that the video editing is more efficient and convenient.

It should be understood that, although the method according to some example embodiments of the present disclosure is described above with an application executing a video editing function as an example, the foregoing method may be performed in other applications having the video editing function. The methods described above may be performed, for example, in a video sharing application, a short video sharing application, and/or a social application.

### Example Processes

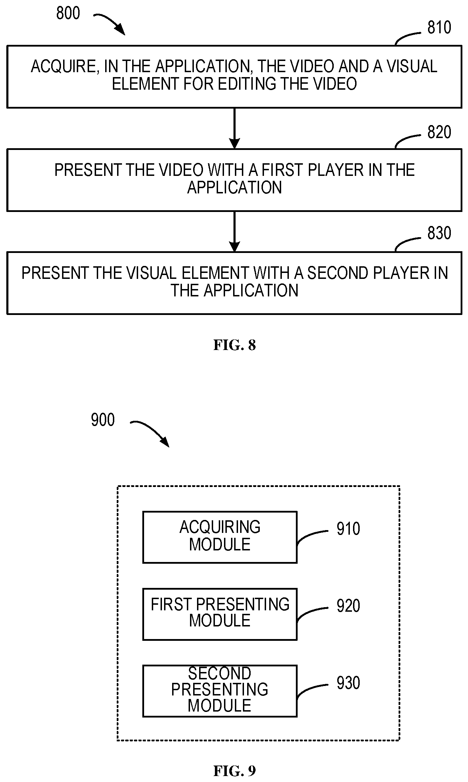

FIG. 8 illustrates a flow chart of a method 800 for editing a video in an application according to some embodiments of the present disclosure. At block 810, in an application, a video and a visual element for editing the video are acquired. At block 820, the video is presented with the first player in the application. At block 830, a visual element is presented with a second player in the application.

In some embodiments, acquiring the visual element comprises at least any of: determining the visual element based on an adding request to add a visual element to the video; or determining the visual element from a draft of the video.

In some embodiments, presenting the visual element with the second player includes: obtaining a position of the visual element in the video; and presenting, at the position, the visual element with the second player. The second player is superimposed on the first player.

In some embodiments, the method 800 further includes: in response to receiving a first user operation for the visual element, presenting a setting control for setting the visual element based on the first user operation; and in response to receiving a second user operation for the setting control, setting the visual element based on the second user operation.

In some embodiments, setting the visual element includes adjusting a posture of the visual element in the video based on the second user operation. The posture includes at least any of: a position, a size, or an orientation. Presenting the visual element with the second player includes adjusting a posture of the second player based on the adjusted posture of the visual element.

In some embodiments, setting the visual element includes adjusting an attribute of the visual element based on the second user operation. The attribute includes at least any of: a timeline, content, a display mode, a layer, and a trajectory.

In some embodiments, setting the visual element includes adjusting a play mode of the visual element based on the second user operation. The play mode includes a loop mode and a non-loop mode.

In some embodiments, the method 800 further includes presenting a switch control for switching a state of the second player based on the first user operation. The switch control is used for: starting the second player or pausing the second player.

In some embodiments, the method 800 further includes presenting, in the application, a switch control for switching the state of the first player. The switch control is used for starting the first player or pausing the first player.

In some embodiments, the method further includes in response to receiving a third user operation for starting the first player, updating a position of the second player based on a position of the visual element in the video.

In some embodiments, the method further includes: in response to receiving an export operation for exporting the video, generating an exported video. The exported video includes the video and the visual element.

In some embodiments, a frame of the second player is hidden, and the second player is a lightweight player.

### Example Apparatus and Device

FIG. 9 illustrates a block diagram an apparatus 900 for editing a video in an application according to some embodiments of the present disclosure. The apparatus 900 includes an acquiring module 910 configured to acquire, in an application, a video and a visual element for editing a video. The apparatus 900 further includes a first presenting module 920 configured to present the video with the first player in the application. The apparatus 900 further includes a second presenting module 930 configured to present the visual element with a second player in the application.

In some embodiments, the acquiring module 910 is further configured to determine the visual element based on an adding request to add a visual element to the video; or determine the visual element from a draft of the video.

In some embodiments, the second presenting module 930 is further configured to obtain a position of the visual element in the video; and present, at the position, the visual element with the second player. The second player is superimposed on the first player.

In some embodiments, the apparatus 900 further includes a setting unit configured to present, in response to receiving a first user operation for the visual element, a setting control for setting the visual element based on the first user operation; and in response to receiving the second user operation for the setting control, set the visual element based on the second user operation.

In some embodiments, the setting unit is further configured to adjust a posture of the visual element in the video based on the second user operation. The posture includes at least one any of: a position, a size, and an orientation. The second presenting module is further configured to adjust a posture of the second player based on the adjusted posture of the visual element.

In some embodiments, the setting unit is further configured to adjust an attribute of the visual element based on the second user operation. The attribute includes at least any of: a timeline, content, a display mode, a layer, and a trajectory.

In some embodiments, the setting unit is further configured to adjust a play mode of the visual element based on the second user operation. The play mode includes: a loop mode and a non-loop mode.

In some embodiments, the apparatus 900 further includes a first switching unit configured to present a switch control for switching the state of the second player based on the first user operation. The switch control is used for: starting the second player or pausing the second player.

In some embodiments, the apparatus 900 further includes a second switching unit configured to present, in the application, a switch control for switching a state of the first player. The switch control is used for: starting the second player or pausing the second player.

In some embodiments, the apparatus 900 further includes an updating unit configured to in response to receiving a third user operation for starting the first player, update a position of the second player based on a position of the visual element in the video.

In some embodiments, the apparatus 900 further includes an export unit configured to in response to receiving an export operation for exporting the video, generate an exported video. The exported video includes the video and the visual element.

In some embodiments, a frame of the second player is hidden, and the second player is a lightweight player.

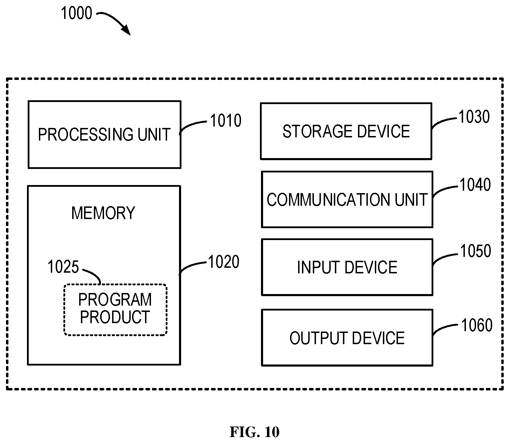

FIG. 10 illustrates a block diagram of a device 1000 capable of implementing various embodiments of the present disclosure. It should be understood that the computing device 1000 illustrated in FIG. 10 is merely an example and should not constitute any limitation on the functionality and scope of the embodiments described herein. The computing device 1000 illustrated in FIG. 10 may be configured to implement the method described above.

As illustrated in FIG. 10, the computing device 1000 is in the form of a general-purpose computing device. Components of the computing device 1000 may include, but are not limited to, one or more processors or processing units 1010, a memory 1020, a storage device 1030, one or more communication units 1040, one or more input devices 1050, and one or more output devices 1060. The processing unit 1010 may be an actual or virtual processor and capable of performing various processes according to programs stored in the memory 1020. In multiprocessor systems, multiple processing units execute computer-executable instructions in parallel to improve parallel processing capabilities of computing device 1000.

Computing device 1000 typically includes a plurality of computer storage media. Such media may be any available media accessible by the computing device 1000, including, but not limited to, volatile and non-volatile media, removable and non-removable media. The memory 1020 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 1030 may be a removable or non-removable medium and may include a machine-readable medium, such as a flash drive, magnetic disk, or any other medium, which may be capable of storing information and/or data (e.g., training data for training) and may be accessed within computing device 1000.

The computing device 1000 may further include additional removable / non-removable, volatile / non-volatile storage media. Although not illustrated in FIG. 10, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not illustrated) by one or more data media interfaces. The memory 1020 may include a computer program product 1025 having one or more program modules configured to perform various methods or actions of various embodiments of the present disclosure.

The communications unit 1040 implements communications with other computing devices over a communications medium. Additionally, the functionality of components of the computing device 1000 may be implemented in a single computing cluster or multiple computing machines capable of communicating over a communication connection. Thus, the computing device 1000 may operate in a networked environment using logical connections with one or more other servers, network personal computers (PCs), or another network node.

The input device 1050 may be one or more input devices such as a mouse, a keyboard, a trackball, or the like. The output device 1060 may be one or more output devices, such as a display, a speaker, a printer, or the like. Computing device 1000 may also communicate with one or more external devices (not illustrated) as needed, external devices such as storage devices, display devices, etc., communicate with one or more devices that enable a user to interact with computing device 1000, or communicate with any device (e.g., network card, modem, etc.) that enables computing device 1000 to communicate with one or more other computing devices. Such communication may be performed via an input/output (I/O) interface (not illustrated).

According to example embodiments of the present disclosure, there is provided a computer-readable storage medium having computer-executable instructions stored thereon, wherein the computer-executable instructions are executed by a processor to implement the method described above. According to an example embodiment of the present disclosure, a computer program product is further provided, the computer program product being tangibly stored on a non-transient computer readable medium and including computer executable instructions, the computer executable instructions being executed by a processor to implement the method described above. According to example embodiments of the present disclosure, there is provided a computer program product having stored thereon a computer program, which when executed by a processor, implements the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions / acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, the practical application, or improvements to the technology in the marketplace, or to enable others of ordinary skill in the art to understand the various embodiments disclosed herein.

## Claims

1. A method (800) for editing a video in an application, comprising:
acquiring (810), in the application, the video and a visual element for editing the video;
presenting (820) the video with a first player in the application; and
presenting (830) the visual element with a second player in the application.

2. The method (800) of claim 1, wherein acquiring the visual element comprises at least any of:
determining the visual element based on an adding request to add a visual element to the video; or
determining the visual element from a draft of the video.

3. The method (800) of claim 1 or 2, wherein presenting the visual element with the second player comprises:
obtaining a position of the visual element in the video; and
presenting, at the position, the visual element with the second player, the second player being superimposed on the first player.

4. The method (800) of any of claims 1 to 3, further comprising:
in response to receiving a first user operation for the visual element, presenting a setting control for setting the visual element based on the first user operation; and
in response to receiving a second user operation for the setting control, setting the visual element based on the second user operation.

5. The method (800) of claim 4, wherein setting the visual element comprises:
adjusting a posture of the visual element in the video based on the second user operation, the posture comprising at least any of: a position, a size, or an orientation;
wherein presenting the visual element with the second player comprises: adjusting a posture of the second player based on the adjusted posture of the visual element.

6. The method (800) of claim 4 or 5, wherein setting the visual element comprises:
adjusting an attribute of the visual element based on the second user operation, the attribute comprising at least any of: a timeline, content, a display mode, a layer, and a trajectory.

7. The method (800) of any of claims 4 to 6, wherein setting the visual element comprises:
adjusting a play mode of the visual element based on the second user operation, the play mode comprising: a loop mode and a non-loop mode.

8. The method (800) of any of claims 4 to 7, further comprising:
presenting a switch control for switching a state of the second player based on the first user operation, the switch control being used for: starting the second player or pausing the second player.

9. The method (800) of any of claims 1 to 8, further comprising:
presenting, in the application, a switch control for switching a state of the first player, the switch control being used for: starting the first player or pausing the first player.

10. The method (800) of claim 9, further comprising:
in response to receiving a third user operation for starting the first player, updating a position of the second player based on a position of the visual element in the video.

11. The method (800) of any of claims 1 to 10, further comprising:
in response to receiving an export operation for exporting the video, generating an exported video, the exported video comprising the video and the visual element.

12. An apparatus (900) for editing a video in an application, comprising:
an acquiring module (910) configured to acquire, in the application, the video and a visual element for editing the video;
a first presenting module (920) configured to present the video with a first player in the application; and
a second presenting module (930) configured to present the visual element with a second player in the application.

13. An electronic device, comprising:
at least one processing unit; and
at least one memory coupled to the at least one processing unit and storing instructions executable by the at least one processing unit, the instructions, when executed by the at least one processing unit, cause the electronic device to perform the method of any of claims 1 to 11.

14. A computer-readable storage medium having a computer program stored thereon, the computer program, when executed by a processor, causes the processor to perform the method of any of claims 1 to 11.

15. A computer program product, comprising a computer program, wherein the computer program, when executed by a processor, performs the method of any of claims 1 to 11.
